# EUROPÄISCHE PATENTSCHRIFT

(11) **EP 3 167 171 B1**
(45) Veröffentlichungstag und Bekanntmachung des Hinweises auf die Patenterteilung: **25.10.2017**
(21) Anmeldenummer: 15734182.7
(22) Anmeldetag: 06.07.2015
(51) Int. Cl.: F01N 3/20, F01N 13/00, F01N 3/035

(54) **VERFAHREN ZUM BETREIBEN EINER REDUKTIONSMITTELDOSIERUNG EINES SCR-KATALYSATORSYSTEMS SOWIE ENTSPRECHENDES SCR-KATALYSATORSYSTEM**
METHOD FOR OPERATING A REDUCING AGENT DOSING OF AN SCR CATALYST SYSTEM, AND CORRESPONDING SCR CATALYST SYSTEM
PROCÉDÉ PERMETTANT LE DOSAGE D'UN AGENT DE RÉDUCTION D'UN SYSTÈME DE CATALYSEUR SCR ET SYSTÈME DE CATALYSEUR SCR CORRESPONDANT

(30) Priorität: 16.07.2014 DE 102014213890
(43) Veröffentlichungstag der Anmeldung: 17.05.2017
(73) Patentinhaber: Volkswagen Aktiengesellschaft, 38440 Wolfsburg (DE)
(72) Erfinder: NIGRO, Giampaolo, 38446 Wolfsburg (DE); KÖSTERS, Martina, 30161 Hannover (DE)
(86) Internationale Anmeldenummer: PCT/EP2015/065381
(87) Internationale Veröffentlichungsnummer: WO 2016/008758

(56) Entgegenhaltungen:
- EP-A1- 2 439 384
- DE-A1-102006 027 357
- DE-A1-102010 032 544
- DE-A1-102012 221 905

## Beschreibung

Die Erfindung betrifft ein Verfahren zum Betreiben einer Reduktionsmitteldosierung eines nach dem Prinzip der selektiven katalytischen Reduktion (SCR) arbeitenden SCR-Katalysatorsystems. Die Erfindung betrifft ferner ein zur Ausführung des Verfahrens eingerichtetes Katalysatorsystem.

Verbrennungsmotoren, die zeitweise oder überwiegend mit einem mageren Luft-KraftstoffGemisch betrieben werden, produzieren Stickoxide NO_{X} (hauptsächlich NO₂ und NO), die NO_{X}-reduzierende Maßnahmen erforderlich machen. Eine motorische Maßnahme, um die NO_{X}-Rohemission im Abgas zu reduzieren, stellt die Abgasrückführung dar, bei der ein Teil des Abgases des Verbrennungsmotors in die Verbrennungsluft rückgeführt wird, wodurch die Verbrennungstemperaturen gesenkt und somit die NO_{X}-Entstehung reduziert wird. Die Abgasrückführung ist jedoch nicht immer ausreichend, um gesetzliche NO_{X}-Grenzwerte einzuhalten, weswegen zusätzlich eine aktive Abgasnachbehandlung erforderlich ist, welche die NO_{X}-Endemission senkt. Eine bekannte NO_{X}-Abgasnachbehandlung sieht den Einsatz von NO_{X}-Speicherkatalysatoren vor, die im mageren Betrieb (bei λ > 1) Stickoxide in Form von Nitraten speichern und in kurzen Intervallen mit einer fetten Abgasatmosphäre (λ, < 1) die gespeicherten Stickoxide desorbieren und in Gegenwart der im fetten Abgas vorhandenen Reduktionsmittel zu Stickstoff N₂ reduzieren.

Als weiterer Ansatz zur Konvertierung von Stickoxiden in Abgasen magerlauffähiger Verbrennungsmotoren ist der Einsatz von Katalysatorsystemen bekannt, die nach dem Prinzip der selektiven katalytischen Reduktion (SCR für selective catalytic reduction) arbeiten. Diese Systeme umfassen zumindest einen SCR-Katalysator, der in Gegenwart eines dem Abgas zugeführten Reduktionsmittels, üblicherweise Ammoniak NH₃, die Stickoxide des Abgases in Stickstoff und Wasser umwandelt. Dabei kann das Ammoniak aus einer wässrigen Ammoniaklösung dem Abgasstrom zudosiert werden oder aus einer Vorläuferverbindung, beispielsweise Harnstoff in Form einer wässrigen Lösung oder fester Pellets, im Wege der Thermolyse und Hydrolyse erhalten werden. Ein neuer Ansatz für die Ammoniakspeicherung im Fahrzeug stellen NH₃-Speichermaterialien dar, die Ammoniak in Abhängigkeit von der Temperatur reversibel binden. Insbesondere sind in diesem Zusammenhang Metallamminspeicher bekannt, beispielsweise MgCl₂, CaCl₂ und SrCl₂, die Ammoniak in Form einer Komplexverbindung speichern, um dann beispielsweise als MgCl₂(NH₃)_{X}, CaCl₂(NH₃)_{X} beziehungsweise SrCl₂(NH₃)_{X} vorzuliegen. Aus diesen Verbindungen kann durch Zufuhr von Wärme das Ammoniak wieder freigesetzt werden.

Um eine weitere Absenkung der Stickoxidemissionen zu erzielen, sind ferner zweistufige SCR-Katalysatorsysteme bekannt, die eine erste, motornah angeordnete SCR-Abgasreinigungseinrichtung umfassen sowie einen dieser nachgeschalteten SCR-Katalysator, der sich üblicherweise an einer Unterbodenposition des Fahrzeugs befindet. Dabei kann die motornahe SCR-Abgasreinigungseinrichtung insbesondere als ein Partikelfilter ausgestaltet sein, der eine SCR-katalytische Beschichtung aufweist. Ein solcher katalytisch beschichteter Partikelfilter (auch SDPF genannt) vereinigt somit die Funktionen der Zurückhaltung von Rußpartikeln sowie der selektiven katalytischen Reduzierung von Stickoxiden in Gegenwart eines Reduktionsmittels, insbesondere von NH₃. Durch die motornahe Anordnung der SCR-Abgasreinigungseinrichtung beziehungsweise des SDPF wird eine schnelle Aufheizung dieser SCR-Komponente auf ihre Betriebstemperatur erzielt. Dies ermöglicht eine frühzeitige Freigabe der Reduktionsmitteldosierung und somit eine verbesserte NO_{X}-Konvertierung im gesamten Fahrzyklus. Der nachgeschaltete SCR-Katalysator dient der weiteren Verbesserung der NO_{X}-Konvertierung sowie der Verhinderung der Emission eines Reduktionsmittelschlupfes der motornahen SCR-Einrichtung.

Die motornahe SCR-Abgasreinigungseinrichtung, insbesondere in Form eines motornahen SDPFs, gestattet jedoch nur den Einsatz einer begrenzten Menge an katalytischer SCR-Beschichtung, da andernfalls nicht tolerierbare Abgasgegendrücke entstünden. Somit reicht die NO_{X}-Konvertierungsrate der motornahen SCR-Abgasreinigungseinrichtung häufig nicht aus, über das gesamte Betriebskennfeld niedrigen NO_{X}-Emissionsanforderungen gerecht zu werden. Aus diesem Grund ist der nachgeschaltete SCR-Katalysator weiterhin erforderlich, wobei sein Katalysatorvolumen jedoch gegenüber SCR-Konzepten, die ausschließlich einen Unterboden-SCR-Katalysator verwenden, reduziert werden kann.

DE 10 2008 043 706 A1 schlägt ein NO_{X}-Nachbehandlungssystem mit einem vorgeschalteten NO_{X}-Speicherkatalysator (LNT-Katalysator) und einem nachgeschalteten SCR-Katalysator für einen Magermotor vor, welches ohne eine externe Reduktionsmitteldosierung in das Abgas auskommt. Dabei produziert der NO_{X}-Speicherkatalysator in länger anhaltenden Fettbetriebsphasen des Verbrennungsmotors, die zum Zweck der Regeneration des NO_{X}-Speicherkatalysators durchgeführt werden, Ammoniak, welches in dem nachgeschalteten SCR-Katalysator eingelagert und mit NO_{X} umgesetzt wird. Eine Weiterentwicklung dieses Systems ist in DE 10 2001 006 200 A1 beschrieben. Hier ist der vorgeschaltete LNT-Katalysator zusätzlich mit einer Partikelfilterfunktion (DPF/LNT-Stufe) ausgebildet.

Aus DE 10 2010 125 A1 ist ein Abgasnachbehandlungssystem für einen Dieselmotor bekannt, das einen Oxidationskatalysator (DOC), einen nachgeschalteten SCR-Katalysator sowie stromab von diesem einen katalysierten Dieselpartikelfilter (CDPF) aufweist. Eine Dosierung von Harnstoff in den Abgasstrom vor dem SCR-Katalysator wird so gesteuert, dass vor einer anstehenden Regeneration des Dieselpartikelfilters der Ammoniakfüllstand des SCR-Katalysators gesenkt wird. Dies soll vermeiden, dass bei den hohen für die Regeneration erforderlichen Abgastemperaturen gespeichertes Ammoniak aus dem SCR-Katalysator freigesetzt wird.

Die DE 10 2010 032 544 A1 beschreibt ein System zur selektiven katalytischen Reduktion und ein Verfahren zum Steuern der selektiven katalytischen Reduktio in mehr als einem Bereich zur Schadstoffbegrenzung eines Fahrzeugs. Dabei wird in dem SCR-System unter mehreren Bereichen unterschieden. Diese Bereiche werden dann einzeln betrachtet und mit einer unterschiedlichen Menge von Reduktionsmittel versorgt. So kann ein hoher NO_{X}-Umwandlungswirkungsgrad erzielt werden und das Risiko eines Reduktionsmittelschlupfes über einen breiten Bereich der Betriebsbedingungen gesteuert werden.

In der EP 2 439 384 A1 wird ein System zum Reinigen von Abgas beschrieben. Dieses System umfasst zwei SCR-Katalysatoren und eine Vorrichtung zum Einleiten von Reduktionsmittel. Die Vorrichtung zum Einleiten von Reduktionsmittel ist stromauf des ersten SCR-Katalysators angeordnet. Das Einleiten von Reduktionsmittel wird mit einer Abschätzung der Konzentration von Reduktionsmittel in dem ersten und dem zweiten SCR-Katalysator gesteuert. Dazu wird die Menge des Reduktionsmittels im zweiten SCR-Katalysator als Maß für die Steuerung der Vorrichtung zum Einleiten von Reduktionsmittel

Die DE 10 2006 027 357 A1 offenbart ein Verfahren zum Betreiben Abgasanlage einer Verbrennungskraftmaschine mit mindestens zwei SCR-Katalysatorstufen. Die SCR-Katalysatorstufen können dabei aneinander grenzen oder beabstandet sein. Für die Bemessungsgröße des Reduktionsmittels wird eine Speicherkapazität der ersten SCR-Katalysatorstufe herangezogen. Durch diese Bemessung wird ein Schlupf von Reduktionsmittel stromab der SCR-Katalysatorstufe verhindert.

Aus der DE 10 2012 221 905 A1 ist eine Gesamtsystemoptimierung mit Hilfe eines analytischen SCR-Modells bekannt. Über einen Soll-Gesamtwirkungsgrad wird dabei ein Soll-Beladungsgrad von Reduktionsmittel eines ersten SCR Katalysators ermittelt. In dem Verfahren erfolgt die Einstellung nur anhand des Soll-Beladungswertes des ersten SCR-Katalysators und die Beladung wird mit einer einzelnen Dosierstelledurchgeführt. Das System ist somit möglichst einfach gestaltet.

DE 10 2012 010 991 A1 beschreibt ein Verfahren zum Betreiben einer Reduktionsmitteldosierung eines SCR-Katalysatorsystems, umfassend eine erste motornahe SCR-Abgasreinigungseinrichtung, die insbesondere als SDPF ausgebildet sein kann, und einen nachgeschalteten SCR-Katalysator sowie eine (einzige) Reduktionsmitteldosiereinrichtung zur Dosierung eines Reduktionsmittels in den Abgasstrom stromauf der ersten SCR-Abgasreinigungseinrichtung. In Abhängigkeit von den Temperaturen der beiden SCR-Komponenten erfolgt die Reduktionsmitteldosierung in folgenden zwei Modi: Wenn die Temperatur der ersten SCR-Abgasreinigungseinrichtung größer oder gleich einer vorbestimmten Mindesttemperatur ist und die Temperatur des nachgeschalteten SCR-Katalysators kleiner als eine vorbestimmte Mindesttemperatur ist, erfolgt die Reduktionsmitteldosierung in einem ersten Betriebsmodus so, dass ein Reduktionsmittelfüllstand der ersten SCR-Abgasreinigungseinrichtung kleiner als ihr maximaler Reduktionsmittelfüllstand ist. Wenn hingegen die Temperatur des nachgeschalteten SCR-Katalysators größer oder gleich seiner Mindesttemperatur ist, erfolgt die Reduktionsmitteldosierung in einem zweiten Betriebsmodus so, dass der Reduktionsmittelfüllstand der ersten SCR-Abgasreinigungseinrichtung größer ist als ihr maximaler Reduktionsmittelfüllstand, sodass ein die erste SCR-Abgasreinigungseinrichtung passierender Reduktionsmitteldurchbruch den nachgeschalteten SCR-Katalysator beaufschlagt. Somit erfolgt die Reduktionsmitteldosierung in wenigstens zwei Betriebsmodi, wobei entweder nur die erste SCR-Komponente mit Reduktionsmittel beaufschlagt und beladen wird oder mit einer einzigen Reduktionsmitteldosiereinrichtung beide SCR-Komponenten mit Reduktionsmittel beaufschlagt und beladen werden. Im letzteren Fall erfolgt die Beladung des nachgeschalteten SCR-Katalysators durch Überladung und Überlaufen der motornahen SCR-Abgasreinigungseinrichtung. Zusätzlich zu der Temperaturbedingung kann als ein weiteres Kriterium für die Aktivierung der Beladung des nachgeschalteten SCR-Katalysators, das heißt den Wechsel in den zweiten Betriebsmodus, ein Mindest-NO_{X}-Massenstrom des Abgases gefordert werden. Die Reduktionsmitteldosierung wird gestoppt, wenn der nachgeschaltete SCR-Katalysator seinen Soll-Füllstand erreicht hat.

Es wurde jedoch beobachtet, dass bei hohen Abgasmassenströmen, beispielsweise in Volllastsituationen, trotz ausreichend beladenem nachgeschalteten SCR-Katalysator dieser nicht seine volle Konvertierungsleistung zeigt. Dies ist darauf zurückzuführen, dass am vorgeschalteten SCR-Katalysator die NO_{X}-Konvertierung bei den hohen Raumgeschwindigkeiten und folglich niedrigen Kontaktzeiten nur eine Teilreduzierung von NO₂ hauptsächlich zu NO erfolgt. Dieses wird verglichen mit NO₂ nur mit geringen Reaktionsgeschwindigkeiten umgesetzt. Zudem sind hohe Abgasmassenströme in der Regel auch mit hohen Abgastemperaturen verbunden, bei denen das im vorderen SCR-Katalysator gespeicherte NO_{X} von diesem wieder desorbiert wird.

Der Erfindung liegt die Aufgabe zugrunde, ein Verfahren zum Betreiben einer Reduktionsmitteldosierung eines eingangs beschriebenen zweistufigen SCR-Katalysatorsystems zur Verfügung zu stellen, mit dem die NO_{X}-Konvertierungsrate, insbesondere bei hohen Lastsituationen verbessert wird. Es soll ferner ein zur Ausführung des Verfahrens eingerichtetes SCR-Katalysatorsystem bereitgestellt werden.

Diese Aufgabe wird durch ein Verfahren sowie durch ein SCR-Katalysatorsystem mit den Merkmalen der unabhängigen Ansprüche gelöst. Weitere vorteilhafte Ausgestaltungen der Erfindung sind Gegenstand der abhängigen Ansprüche.

Das erfindungsgemäße Verfahren zum Betreiben einer Reduktionsmitteldosierung bezieht sich auf ein SCR-Katalysatorsystem eines Verbrennungsmotors, das eine erste (insbesondere motornahe) SCR-Abgasreinigungseinrichtung und einen dieser nachgeschalteten SCR-Katalysator aufweist sowie eine (insbesondere einzige) Reduktionsmitteldosiereinrichtung zur Dosierung eines Reduktionsmittels in den Abgasstrom stromauf der ersten SCR-Abgasreinigungseinrichtung. Erfindungsgemäß ist vorgesehen, dass wenn ein Abgasmassenstrom größer als eine vorbestimmte Abgasmassenstromschwelle ist und eine Temperatur des nachgeschalteten SCR-Katalysators größer als eine vorbestimmte Mindesttemperatur ist, die Reduktionsmitteldosierung in einen Hochlastbetriebsmodus (nachfolgend auch: Betriebsmodus III) wechselt, in welcher ein Reduktionsmittelsollfüllstand der ersten SCR-Abgasreinigungseinrichtung reduziert oder auf null gesenkt wird.

Erfindungsgemäß wird somit bei hohen Abgasmassenströmen, also bei hohen Lastsituationen, der Reduktionsmittelsollfüllstand der ersten SCR-Abgasreinigungseinrichtung gezielt gesenkt und die erste SCR-Abgasreinigungseinrichtung somit heruntergefahren. Infolgedessen wird der nachgeschaltete SCR-Katalysator mit dem aus der vorderen SCR-Einrichtung freigesetzten Reduktionsmittel beaufschlagt. Zudem ist somit sichergestellt, dass zu diesem Zeitpunkt der nachgeschaltete SCR-Katalysator selbst einen gewissen Reduktionsmittelfüllstand aufweist. Durch die Abschaltung der vorderen SCR-Einrichtung wird der nachgeschaltete SCR-Katalysator somit auch mit dem vollen NO₂-Gehalt des Abgases beaufschlagt, das in einer besonders schnellen Reaktion zu Stickstoff reduziert wird. Begünstigt wird der NO_{X}-Umsatz durch die geringeren Raumgeschwindigkeiten und niedrigeren Katalysatortemperaturen gegenüber der vorgeschalteten SCR-Komponente. Gleichzeitig wird sichergestellt, dass das Reduktionsmittel auf dem nachgeschalteten-SCR-Katalysator vollständig umgesetzt wird und dieser somit nicht überladen wird.

Es versteht sich, dass anstelle des Kriteriums des Überschreitens der Abgasmassenstromschwelle auch das Überschreiten einer NO_{X}-Massenstromschwelle oder eines mit diesen Größen unmittelbar korrelierenden Parameters, insbesondere einer Motorlastschwelle, gefordert werden kann. Insbesondere wird die Abgasmassenstromschwelle beziehungsweise die korrelierende Größe so gewählt, dass sie einem im oberen Lastbereich des Verbrennungsmotors vorliegenden Abgasmassenstrom entspricht, vorzugsweise dem Abgasmassenstrom bei Volllast.

Vorzugsweise wird während des Hochlastbetriebsmodus ein Reduktionsmittelfüllstand der ersten SCR-Abgasreinigungseinrichtung entsprechend einer temperaturabhängigen Soll-Füllstandskennlinie gesteuert, die über den relevanten Temperaturbereich höchstens bei 10 % eines maximalen Füllstands der ersten SCR-Abgasreinigungseinrichtung liegt, insbesondere bei höchstens 5 %, vorzugsweise bei 0%. Da zu Beginn einer Hoch- oder Volllastsituation die vordere SCR-Abgasreinigungseinrichtung in der Regel maximal beladen ist, führt diese Steuerung zwangsläufig zu einer Unterbrechung der Reduktionsmittelzufuhr und somit zu dem gewünschten Entleeren der vorderen SCR-Einrichtung.

In vorteilhafter Ausgestaltung der Erfindung wird als eine zusätzliche Bedingung für den Wechsel in den erfindungsgemäßen Hochlastbetriebsmodus das Überschreiten einer Mindestbeladung des nachgeschalteten SCR-Katalysators gefordert. Diese Maßnahme führt zu einer weiteren Erhöhung der Prozesssicherheit.

Vorzugsweise wird als Bedingung für ein Beenden des erfindungsgemäßen Hochlastbetriebsmodus ein Unterschreiten der vorbestimmten Abgasmassenstromschwelle durch den Abgasmassenstrom gefordert, da bei geringeren Raumgeschwindigkeiten und niedrigeren Abgastemperaturen die vordere SCR-Einrichtung wieder effizient die NO_{X}-Konvertierung übernehmen oder unterstützen kann. Alternative oder zusätzliche Bedingungen für das Beenden des Hochlastbetriebsmodus umfassen ein Absinken einer NO_{X}-Konvertierungsrate unterhalb einer vorbestimmten Konvertierungsschwelle und/oder das Absinken des Reduktionsmittelfüllstands des nachgeschalteten SCR-Katalysators unterhalb eines Sollfüllstands. Diese Kriterien zeigen eine Entleerung des SCR-Katalysators an, der somit wieder beladen werden muss, um eine ausreichende Konvertierungsleistung zu gewährleisten.

In bevorzugter Ausführung der Erfindung erfolgt, wenn die Temperatur des nachgeschalteten SCR-Katalysators größer oder gleich seiner Mindesttemperatur ist und der Abgasmassenstrom kleiner als die vorbestimmte Abgasmassenstromschwelle ist, die Reduktionsmitteldosierung zumindest zeitweise in einem Teillastbetriebsmodus (Betriebsmodus II) so, dass der Reduktionsmittelfüllstand der ersten SCR-Abgasreinigungseinrichtung größer ist als ihr maximaler Reduktionsmittelfüllstand und ein die erste SCR-Abgasreinigungseinrichtung passierender Reduktionsmitteldurchbruch den nachgeschalteten SCR-Katalysator beaufschlagt. Durch diese Maßnahme werden mit einer einzigen Reduktionsmitteldosiereinrichtung beide SCR-Komponenten mit Reduktionsmittel beaufschlagt und beladen. Insbesondere erfolgt die Beladung des nachgeschalteten SCR-Katalysators durch Überladung und Überlaufen der motornahen SCR-Abgasreinigungseinrichtung. Der Teillastbetriebsmodus wird vorzugsweise auch dann gewählt, wenn der Volllastbetriebsmodus aufgrund zu niedriger NO_{X}-Konvertierungsrate oder einer zu geringen Beladung des SCR-Katalysators beendet wird. Vorzugsweise wird in dem Teillastbetriebsmodus (II) der Reduktionsmittelfüllstand der ersten SCR-Abgasreinigungseinrichtung entsprechend einer temperaturabhängigen Soll-Füllstandskennlinie gesteuert. Insbesondere liegt die Soll-Füllstandskennlinie für die erste SCR-Abgasreinigungseinrichtung im Teillastbetriebsmodus zumindest in einem gewissen Temperaturbereich oberhalb ihres maximalen Reduktionsmittelfüllstandes, sodass in diesem Temperaturbereich gezielt ein Überlaufen des Reduktionsmittels, das heißt ein Reduktionsmitteldurchbruch durch die erste SCR-Abgasreinigungseinrichtung erzwungen wird. Vorzugsweise wird ein Soll-Füllstand des nachgeschalteten SCR-Katalysators im Teillastbetriebsmodus über den Reduktionsmittelfüllstand der ersten SCR-Abgasreinigungseinrichtung temperaturabhängig gesteuert. Durch die Vorhaltung eines gewissen Soll-Füllstandes des SCR-Katalysators wird seine NO_{X}-Konvertierungsleistung verbessert.

Der Teillastbetriebsmodus wird vorzugsweise beendet, wenn der Reduktionsmittelfüllstand des SCR-Katalysators seinen temperaturabhängigen Soll-Füllstand erreicht oder überschreitet und/oder wenn die Temperatur des SCR-Katalysators unterhalb seiner Mindesttemperatur fällt.

Ferner ist bevorzugt, dass wenn die Temperatur der ersten SCR-Abgasreinigungseinrichtung größer oder gleich einer vorbestimmten Mindesttemperatur ist und die Temperatur des nachgeschalteten SCR-Katalysators kleiner als eine vorbestimmte Mindesttemperatur ist, die Reduktionsmitteldosierung in einem Aufwärmbetriebsmodus (Betriebsmodus I) so erfolgt, dass ein Reduktionsmittelfüllstand der ersten SCR-Abgasreinigungseinrichtung kleiner als ihr maximaler Reduktionsmittelfüllstand ist. Durch diese Maßnahme wird vermieden, dass es zu einem Reduktionsmittelschlupf durch die erste SCR-Abgasreinigungseinrichtung kommt, wenn der nachgeschaltete SCR-Katalysator noch nicht seine Betriebstemperatur aufweist. Vorzugsweise wird in dem Aufwärmbetriebsmodus (I) der Reduktionsmittelfüllstand der ersten SCR-Abgasreinigungseinrichtung entsprechend einer ersten temperaturabhängigen Soll-Füllstandskennlinie, die - zumindest im gesamten relevanten Temperaturbereich - unterhalb des maximalen Reduktionsmittelfüllstands verläuft, gesteuert.

Die beiden vorstehend diskutierten Betriebsmodi I und II ermöglichen einerseits mittels einer einzigen Reduktionsmitteldosiereinrichtung, welche das Reduktionsmittel stromauf der ersten SCR-Abgasreinigungskomponente in den Abgasstrom dosiert, die gleichzeitige Beaufschlagung beider Komponenten mit dem Reduktionsmittel. Darüber hinaus lassen sich somit auch die Reduktionsmittelfüllstände beider SCR-Komponenten steuern. Grundsätzlich weisen SCR-Beschichtungen eine gewisse Speicherkapazität für das Reduktionsmittel, beispielsweise Ammoniak, auf. Dabei zeigt es sich, dass die NO_{X}-Konvertierungsleistung beider SCR-Bauteile sich erhöhen lässt, wenn eine gewisse Reduktionsmittelmenge in der jeweiligen SCR-Beschichtung eingespeichert ist. Indem ferner die Reduktionsmitteldosierung in Abhängigkeit der Temperaturen der beiden SCR-Komponenten in der beschriebenen Weise gesteuert wird, wird ferner sichergestellt, dass eine Beaufschlagung der jeweiligen Komponente mit dem Reduktionsmittel nur dann erfolgt, wenn diese Komponente ihre vorbestimmte Mindesttemperatur, welche eine effektive Speicherung und/oder katalytische Umsetzung des Reduktionsmittels gewährleistet, vorliegt. Auf diese Weise werden unerwünschte Reduktionsmittelemissionen wirkungsvoll verhindert.

Dabei versteht es sich, dass die Mindesttemperatur der SCR-Abgasreinigungseinrichtung sowie des nachgeschalteten SCR-Katalysators jeweils so gewählt ist, dass sie eine gewisse NO_{X}-Konvertierungsleistung gewährleistet, das heißt, dass sie die zumindest der unteren Temperaturgrenze eines Aktivitätsfensters bezüglich der NO_{X}-Konvertierung entspricht. Zudem sollte die Temperaturschwelle auch gewährleisten, dass eine erforderliche Aufbereitung des Reduktionsmittels sichergestellt ist. Insbesondere wenn Harnstoff als Lösung oder Feststoff dem Abgasstrom zudosiert wird, muss eine Temperatur vorliegen, bei der die Thermolyse und Hydrolyse des Harnstoffs unter Freisetzung von Ammoniak möglichst quantitativ erfolgt. Vorzugsweise wird die jeweilige Mindesttemperatur entsprechend einer einsetzenden katalytischen Betriebsbereitschaft der jeweiligen Abgasreinigungskomponente gewählt. Zweckmäßigerweise kann hier auch die sogenannte jeweilige Light-Off-Temperatur gewählt werden, die definitionsgemäß derjenigen Temperatur entspricht, bei welcher 50 % der maximalen Konvertierungsleistung vorliegt. Die Light-Off-Temperatur ist insbesondere abhängig von der konkreten Zusammensetzung der katalytischen Beschichtung und kann für die erste SCR-Abgasreinigungseinrichtung und den nachgeschalteten SCR-Katalysator unterschiedlich sein.

Vorzugsweise wird der Teillastbetriebsmodus beendet, wenn der Reduktionsmittelfüllstand des nachgeschalteten SCR-Katalysators seinen temperaturabhängigen Soll-Füllstand erreicht oder überschreitet. Auf diese Weise wird eine Überladung des SCR-Katalysators und somit ein unerwünschter Reduktionsmitteldurchbruch aus diesem verhindert. Ferner wird der zweite Betriebsmodus beendet, wenn die Temperatur des SCR-Katalysators unterhalb seiner Mindesttemperatur fällt. Dies kann beispielsweise bei länger anhaltendem Niedriglastbetrieb des Verbrennungsmotors, beispielsweise im Stadtverkehr, der Fall sein.

Es versteht sich, dass wenn keine der beiden SCR-Komponenten ihre jeweilige Mindesttemperatur aufweist, keine Reduktionsmitteldosierung vorgenommen wird.

Nach einer bevorzugten Ausgestaltung wird nach einer so erzwungenen Beendigung des zweiten Betriebsmodus die Reduktionsmitteldosierung wieder im ersten Betriebsmodus betrieben, wobei der Reduktionsmittelfüllstand der ersten SCR-Abgasreinigungseinrichtung kleiner als ihr maximaler Reduktionsmittelfüllstand gesteuert wird. Auf diese Weise wird ein weiterer Reduktionsmitteldurchbruch durch die motornahe SCR-Abgasreinigungseinrichtung unterbunden. Dies erfolgt solange, bis der Reduktionsmittelfüllstand des SCR-Katalysators einen vorbestimmten temperaturabhängigen Mindestfüllstand erreicht oder unterschreitet und wenn gleichzeitig die Temperatur des SCR-Katalysators größer oder gleich seiner Mindesttemperatur ist. Auf diese Weise wird somit in Abhängigkeit von der Temperatur des SCR-Katalysators sowie seinem Reduktionsmittelfüllstand zwischen dem ersten und dem zweiten Betriebsmodus hin- und hergeschaltet und die Reduktionsmitteldosierung füllstandsgesteuert unter Verwendung der beiden Soll-Füllstandskennlinien für die erste SCR-Abgasreinigungseinrichtung durchgeführt.

Vorzugsweise erfolgt eine kontinuierliche Ermittlung des Reduktionsmittelfüllstands der SCR-Abgasreinigungseinrichtung und/oder des nachgeschalteten SCR-Katalysators. Dabei kann die Ermittlung im Wege einer Bilanzierung in Abhängigkeit von einem Reduktionsmitteleintrag in die jeweilige SCR-Komponente, in Abhängigkeit von einem katalytischen Reduktionsmittelverbrauch sowie in Abhängigkeit von einem Reduktionsmittelaustrag aus der jeweiligen SCR-Komponente ermittelt werden. Im Falle der motornahen SCR-Abgasreinigungseinrichtung entspricht der Reduktionsmitteleintrag der stromauf von dieser Komponente zudosierten Reduktionsmittelmenge. Der katalytische Reduktionsmittelverbrauch kann anhand der NO_{X}-Rohemissionen des Verbrennungsmotors unter Berücksichtigung der Konvertierungsleistung der ersten SCR-Abgasreinigungskomponente ermittelt werden. Die NO_{X}-Rohemissionen können in Abhängigkeit von einem Betriebspunkt des Verbrennungsmotors modelliert werden oder mittels eines stromauf der SCR-Abgasreinigungseinrichtung angeordneten NO_{X}-Sensors ermittelt werden oder durch eine Kombination von Modellierung und Messung. Der Reduktionsmittelaustrag aus der ersten SCR-Abgasreinigungseinrichtung kann einerseits durch eine Reduktionsmitteldesorption beispielsweise aufgrund einer Temperatur außerhalb des Betriebsfensters bedingt werden sowie durch einen Reduktionsmitteldurchbruch aufgrund einer erschöpften Beladungskapazität. Folglich wird der Reduktionsmittelfüllstand der ersten SCR-Abgasreinigungseinrichtung in Abhängigkeit von der zudosierten Reduktionsmittelmenge, die NO_{X}-Rohemissionen des Verbrennungsmotors, der Reduktionsmitteldesorption und/oder des Reduktionsmitteldurchbruchs bestimmt.

Im Falle des nachgeschalteten SCR-Katalysators bestimmt sich sein Reduktionsmitteleintrag durch den Reduktionsmitteldurchbruch und der Reduktionsmitteldesorption der ersten SCR-Abgasreinigungseinrichtung sowie eines katalytischen Reduktionsmittelverbrauchs des SCR-Katalysators. Eine Reduktionsmitteldesorption oder ein Reduktionsmitteldurchbruch aus dem SCR-Katalysator kann unberücksichtigt bleiben, da diese bei der erfindungsgemäßen Steuerung der Reduktionsmitteldosierung praktisch nicht auftreten. Somit wird der Reduktionsmittelfüllstand des SCR-Katalysators vorzugsweise in Abhängigkeit von dem Reduktionsmitteldurchbruch und der Reduktionsmitteldesorption der ersten SCR-Abgasreinigungseinrichtung ermittelt sowie dem katalytischen Reduktionsmittelverbrauch des SCR-Katalysators.

Bei dem zudosierten Reduktionsmittel handelt es sich vorzugsweise um Ammoniak NH₃ oder um eine Vorläuferverbindung von diesem, wobei hier insbesondere Harnstoff in Betracht kommt. Der Harnstoff kann in Form fester Harnstoffpellets, vorzugsweise jedoch in Form einer wässrigen Harnstofflösung eingesetzt werden. Der zudosierte Harnstoff reagiert im Wege der Thermolyse und Hydrolyse unter Freisetzung von NH₃. Grundsätzlich kann im Rahmen der Erfindung das Reduktionsmittel Ammoniak auch über NH₃-Speichermaterialien bevorratet werden, die Ammoniak in Abhängigkeit von der Temperatur reversibel binden beziehungsweise freisetzen. Entsprechende Metallamminspeicher wurden eingangs bereits erläutert.

Die Erfindung betrifft ferner ein SCR-Katalysatorsystem eines Verbrennungsmotors mit einer ersten, motornahen SCR-Abgasreinigungseinrichtung und einem dieser nachgeschalteten SCR-Katalysator sowie einer Reduktionsmitteldosiereinrichtung zur Dosierung eines Reduktionsmittels in den Abgasstrom stromauf der ersten SCR-Abgasreinigungseinrichtung. Das SCR-Katalysatorsystem umfasst eine Steuerung, die eingerichtet ist, das erfindungsgemäße Verfahren zum Betreiben der Reduktionsmitteldosierung auszuführen. Zu diesem Zweck umfasst die Steuerung insbesondere einen entsprechenden computerlesbaren Programmalgorithmus sowie zur Ausführung des Verfahrens notwendige Kennlinien und/oder Kennfelder.

In einer Ausgestaltung der Erfindung umfasst das SCR-Katalysatorsystem zusätzlich einen Partikelfilter zur Entfernung partikulärer Bestandteile aus dem Abgas. Nach einer alternativen, besonders bevorzugten Ausgestaltung der Erfindung ist die erste SCR-Abgasreinigungseinrichtung als ein eine katalytische SCR-Beschichtung aufweisender Partikelfilter (nachfolgend auch SCR-Partikelfilter, SDPF oder SPF genannt) ausgebildet. Diese Ausgestaltung ist sowohl in Hinblick auf den Bauraumbedarf als auch auf Kosten von Vorteil.

Es ist ferner bevorzugt, dass die Abgasanlage eine Abgasturbine als Teil eines Abgasturboladers umfasst, wobei die Abgasturbine vorzugsweise stromauf des nachgeschalteten SCR-Katalysators angeordnet ist. Auf diese Weise sind die beiden SCR-Komponenten thermisch gut voneinander getrennt und können besonders gut in den unterschiedlichen Betriebsmodi betrieben werden.

Schließlich betrifft die Erfindung ein entsprechendes SCR-Katalysatorsystem umfassendes Fahrzeug.

Die Erfindung wird nachfolgend in Ausführungsbeispielen anhand der zugehörigen Zeichnungen näher erläutert. Es zeigen:
- Figur 1: eine schematische Darstellung einer Abgasanlage mit einem erfindungsgemäßen SCR-Katalysatorsystem nach einer Ausgestaltung der Erfindung;
- Figur 2: ein Fließdiagramm eines Verfahrens zum Betreiben einer Reduktionsmitteldosierung des SCR-Katalysatorsystems aus Figur 1 nach einer Ausgestaltung der Erfindung;
- Figur 3: Verläufe einer ersten, zweiten und dritten Soll-Füllstandskennlinie (F1, F2; F3) für den Reduktionsmittelfüllstand (NH3_SPF) des motornahen SCR-Partikelfilters sowie seines maximalen Reduktionsmittelfüllstands (NH3_SPF_max) in Abhängigkeit von seiner mittleren Temperatur; und
- Figur 4: Verläufe des NO_{X}-Umsatzes im motornahen SCR-Partikelfilter sowie im nachgeschalteten SCR-Katalysator in Abhängigkeit von einer Abgastemperatur im SCR-Partikelfilter.

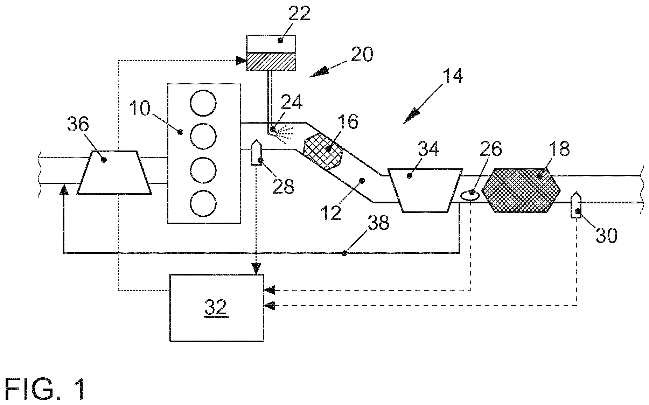

Figur 1 zeigt einen Verbrennungsmotor 10 eines weiter nicht dargestellten Kraftfahrzeugs. Bei dem Verbrennungsmotor 10 handelt es sich um einen permanent oder zumindest zeitweise mager betriebenen Motor, hier einen (selbstzündenden) Dieselmotor. Grundsätzlich ist die Erfindung jedoch nicht auf Dieselmotoren beschränkt und kann auch bei mager betreibbaren Ottomotoren, insbesondere direkteinspritzenden Ottomotoren angewendet werden.

Ein Abgas des Verbrennungsmotors 10 wird über einen nicht dargestellten Abgaskrümmer in einen Abgaskanal 12 eingeleitet, wo es durch ein insgesamt mit 14 bezeichnetes SCR-Katalysatorsystem zur Konvertierung von im Abgas vorhandenen Stickoxiden nachbehandelt wird. Selbstverständlich kann das Abgassystem weitere Abgasnachbehandlungskomponenten enthalten, die hier nicht näher dargestellt oder erwähnt werden.

Das SCR-Katalysatorsystem 14 weist an einer motornahen Position eine erste SCR-Abgasreinigungskomponente 16 auf, das heißt eine Komponente, die eine nach dem Prinzip der selektiven katalytischen Reduktion arbeitende SCR-Beschichtung aufweist. Im vorliegenden Fall handelt es sich bei der SCR-Abgasreinigungskomponente 16 um einen eine katalytische SCR-Beschichtung aufweisenden Dieselpartikelfilter (auch mit SDPF oder SCR-Partikelfilter bezeichnet), der neben seiner katalytischen SCR-Beschichtung eine Rückhaltefunktion für partikuläre Abgasbestandteile, wie Rußpartikel aufweist. Der Aufbau von Dieselpartikelfiltern auch solchen mit katalytischen Beschichtungen ist grundsätzlich bekannt und bedarf keiner näheren Erläuterung. Dabei wird im Rahmen der vorliegenden Erfindung mit dem Begriff "motornah" ein Abstand zwischen Zylinderauslass des Verbrennungsmotors 10 und Stirnfläche der SCR-Abgasreinigungskomponente 16 von höchstens 120 cm, insbesondere höchstens 100 cm, vorzugsweise höchstens 80 cm verstanden. In einer konkreten Ausführung beträgt der Abstand etwa 75 cm.

Das zweistufige SCR-Katalysatorsystem 14 umfasst zudem einen nachgeschalteten, vorzugsweise an einer Unterbodenposition des Fahrzeugs angeordneten SCR-Katalysator 18, der ebenfalls eine katalytische SCR-Beschichtung aufweist, welche gleich oder ähnlich ausgestaltet sein kann wie die des SCR-Partikelfilters 16. Der SCR-Katalysator 18 weist typischerweise ein größeres Volumen sowie eine insgesamt größere Menge der katalytischen SCR-Beschichtung auf. Ein solches Katalysatorsystem, bei dem die Katalysatorfunktion auf zwei Abgasreinigungskomponenten verteilt wird, wird auch als Zwei-Brick-System bezeichnet.

Zudem umfasst das SCR-Katalysatorsystem 14 eine Reduktionsmitteldosiereinrichtung 20 zur Dosierung eines Reduktionsmittels stromauf des SCR-Partikelfilters 16. Im vorliegenden Beispiel wird das Reduktionsmittel in Form einer wässrigen Harnstofflösung (Harnstoff-WasserLösung HWL) eingesetzt, welche in einem Reduktionsmittelvorratsbehälter 22 bevorratet wird. Von hier aus wird es über eine hier nicht dargestellte Fördereinrichtung, beispielsweise eine Pumpe, einer Düse 24 zugeführt, welche in den Abgaskanal 12 stromauf des SCR-Partikelfilters 16 mündet. Aufgrund der hohen Abgastemperaturen an dieser Stelle wird der Harnstoff thermolytisch zersetzt, wobei er das eigentliche Reduktionsmittel Ammoniak NH₃ freisetzt. Optional können zwischen der Düse 24 und dem SCR-Partikelfilter 16 auch Aufbereitungsmittel vorhanden sein, welche die Homogenierung und/oder die Zersetzung des Harnstoffs unterstützen. Das freigesetzte Ammoniak wird entweder in den katalytischen Beschichtungen der SCR-Komponenten 14 und/oder 16 gespeichert oder dort unmittelbar katalytisch mit den Stickoxiden des Abgases des Motors 10 umgesetzt, wobei diese zu Stickstoff N₂ reduziert werden.

In dem Abgaskanal 12 sind ferner verschiedene Sensoren angeordnet. Diese umfassen beispielsweise einen Temperatursensor 26, der die Abgastemperatur stromauf des SCR-Katalysators 18 misst. Es können auch andere Einbauorte für den Temperatursensor realisiert sein oder mehrere Temperatursensoren an geeigneten Positionen des Abgaskanals 12 vorhanden sein. Ferner ist stromauf des SCR-Partikelfilters 16 ein erster NO_{X}-Sensor 28 installiert, welcher die NO_{X}-Rohemission des Verbrennungsmotors 10 erfasst. Alternativ kann auf den NO_{X}-Sensor 28 auch verzichtet werden und die NO_{X}-Rohemission in Abhängigkeit von einem aktuellen Motorbetriebspunkt, insbesondere von der Drehzahl und Last, unter Verwendung entsprechender Kennfelder ermittelt beziehungsweise modelliert werden. Stromab des SCR-Katalysators 18 ist ein zweiter NO_{X}-Sensor 30 angeordnet, der der Überwachung des Katalysatorsystems im Wege der On-board-Diagnose (OBD) dient. Da NO_{X}-Sensoren auch über eine Querempfindlichkeit für Ammoniak verfügen, ist der NO_{X}-Sensor 30 auch in der Lage, unerwünschte Reduktionsmitteldurchbrüche zu erfassen. Optional kann ein weiterer NO_{X}-Sensor auch zwischen den beiden SCR-Komponenten 16, 18 installiert sein.

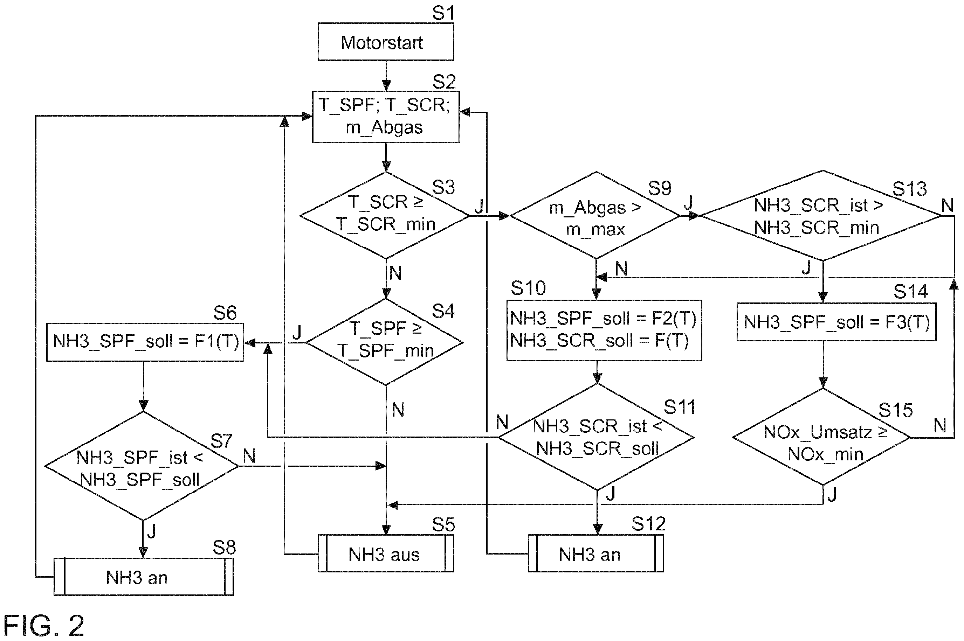

Sämtliche Signale der Sensoren und/oder modellbasiert ermittelte Werte gehen in eine Steuerung 32 ein, welche diese Signale weiterverarbeitet und in Abhängigkeit von ihnen die Reduktionsmitteldosiereinrichtung 20, insbesondere entsprechende Stellmittel (Pumpen oder Ventile) ansteuert. Hierzu weist die Steuerung 32 insbesondere einen gespeicherten und computerlesbaren Programmalgorithmus auf, sowie notwendige Kennlinien und/oder Kennfelder. Die von der Steuerung 32 ausgeführte Funktion zur erfindungsgemäßen Steuerung der Reduktionsmitteldosierung soll nachfolgend anhand der Figuren 2 bis 4 näher erläutert werden.

Die in Figur 1 gezeigte Abgasanlage beinhaltet ferner eine Abgasturbine 34, die über eine hier nicht dargestellt Welle einen Verdichter 36 antreibt, der in einem Luftsystem zur Verdichtung der Verbrennungsluft des Verbrennungsmotors 10 angeordnet ist. Die Abgasturbine 34 und der Verdichter 36 sind Komponenten eines Abgasturboladers. Die Abgasturbine 34 ist vorzugsweise an einer motornahen Position, insbesondere aber stromab des SCR-Partikelfilters 16 angeordnet. Die Abgasanlage verfügt ferner über ein Abgasrückführungssystem (AGR-System) mit einer Abgasrückführleitung 38, mittels der ein Teil des Abgasstroms zurückgeführt und der Verbrennungsluft des Motors 10 zugeführt wird. Weitere Komponenten des Abgasrückführungssystems, beispielsweise ein AGR-Ventil oder ein AGR-Kühler sind nicht dargestellt. Das AGR-System ist vorzugsweise als Niederdruck-AGR-System ausgebildet, das heißt, die AGR-Leitung 38 zweigt stromab der Turbine 34, also auf ihrer Niederdruckseite, vom Abgaskanal 12 ab und mündet stromauf des Verdichters 36 auf seiner Niederdruckseite in das Luftsystem.

Figur 2 zeigt ein Fließdiagramm mit einem vereinfachten Ablauf des erfindungsgemäßen Verfahrens in einer bevorzugten Ausgestaltung. Das Verfahren wird nach jedem Motorstart initialisiert und in regelmäßigen Zyklen wiederholt.

Das Verfahren startet im Schritt S1 mit dem Motorstart. Nach Beendigung des Motorstarts geht es zu S2 über, wo die Temperatur des SCR-Partikelfilters 16 (T_SPF), die Temperatur des SCR-Katalysators 18 (T_SCR) sowie der aktuelle Abgasmassenstrom (m_Abgas) ermittelt werden. Diese Temperaturen können entweder in Abhängigkeit von dem Motorbetriebspunkt des Verbrennungsmotors 10 vollständig modelliert werden oder durch entsprechende Temperatursensoren erfasst werden oder durch eine Kombination aus beidem. Beispielsweise kann die Temperatur des SCR-Katalysators 18 in Abhängigkeit von der mit dem Temperatursensor 26 erfassten Abgastemperatur bestimmt werden. Der Abgasmassenstrom m_Abgas wird üblicherweise in Abhängigkeit eines Luftmassenstroms, der mittels eines in dem Luftsystem des Motors 10 angeordneten Luftmassenmessers (nicht dargestellt) gemessen wird, ermittelt. Er kann jedoch ebenfalls in Abhängigkeit von dem Betriebspunkt des Verbrennungsmotors 10 modelliert werden.

In der anschließenden Abfrage S3 wird überprüft, ob die Temperatur des SCR-Katalysators 18 größer oder gleich einer vorbestimmten Mindesttemperatur T_SCR_min von beispielsweise 170 °C ist. Die Mindesttemperatur entspricht zumindest einer Temperatur, bei welcher eine NO_{X}-Konvertierungsleistung des SCR-Katalysators 18 einsetzt, insbesondere seiner Light-Off-Temperatur, bei der definitionsgemäß 50% der maximalen Konvertierungsleistung vorliegt. Unmittelbar nach Motorstart ist davon auszugehen, dass die Mindesttemperatur T_SCR_min des SCR-Katalysators 18 noch nicht vorliegt. In diesem Fall geht das Verfahren zu der Abfrage S4 über, wo abgefragt wird, ob die Temperatur T_SPF des SCR-Partikelfilters 16 größer oder gleich einer Mindesttemperatur T_SPF_min für den SCR-Partikelfilter 16 von beispielsweise 180 °C ist. Auch diese Temperaturschwelle ist einerseits so ausgelegt, dass eine NO_{X}-Mindestkonvertierungsleistung des SCR-Partikelfilters 16 vorliegt, beispielsweise die NO_{X}-Konvertierung gerade einsetzt oder die Light-Off-Temperatur des SCR-Partikelfilters 16 erreicht ist. Ferner sollte die Mindesttemperatur T_SPF_min eine ausreichende Thermolyse und Hydrolyse des zugeführten Harnstoffs gewährleisten, um diesen in Ammoniak zu überführen. Wird die Abfrage in S4 verneint, das heißt, weder der SCR-Partikelfilter 16 noch der SCR-Katalysator 18 weist seine jeweilige Mindesttemperatur auf, geht das Verfahren zu Schritt S5, wo die Reduktionsmitteldosierung durch die Dosiereinrichtung 20 deaktiviert wird beziehungsweise deaktiviert bleibt. Das Verfahren geht von S5 zurück zu Schritt S2, wo eine erneute Feststellung der Temperaturen T_SPF und T_SCR und des Abgasmassenstroms m_Abgas erfolgt, sodass die Abfragen S3 und S4 zyklisch wiederholt werden.

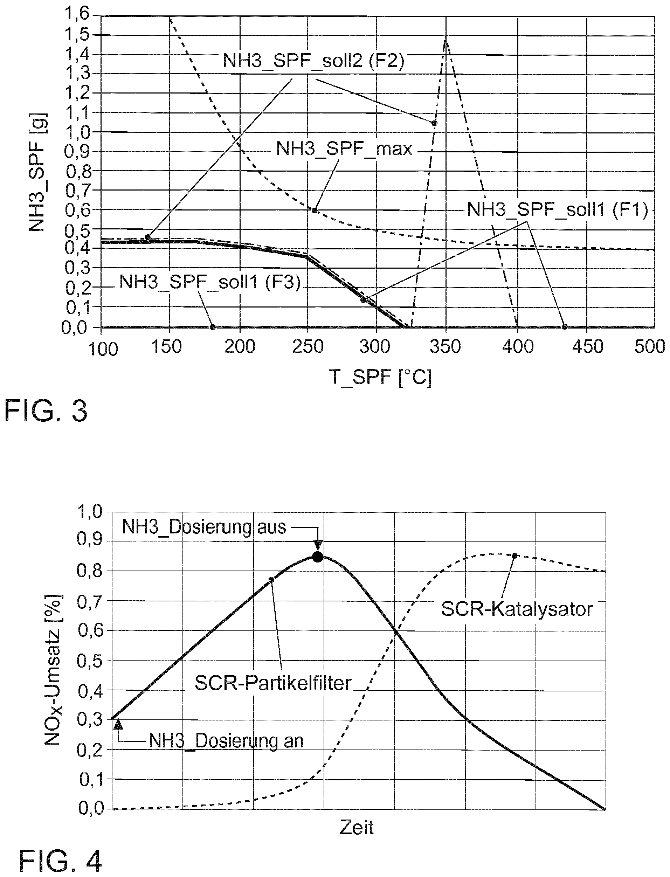

Im Laufe des Motorwarmlaufs erreicht zuerst der SCR-Partikelfilter 16 seine vorbestimmte Mindesttemperatur T_SPF_min. Gleichzeitig hat üblicherweise der Unterboden-SCR-Katalysator 18 seine Mindesttemperatur T_SCR_min noch nicht erreicht. In diesem Fall wird die Abfrage S4 bejaht und das Verfahren geht zu S6 über, wo in Abhängigkeit von der in Schritt S2 bestimmten Temperatur T_SPF des SCR-Partikelfilters 16 ein Soll-Füllstand NH3_SPF_soll für den SCR-Partikelfilter 16 vorbestimmt wird. Dies erfolgt anhand einer ersten Soll-Füllstandskennlinie F1, die in Figur 3 dargestellt ist. Figur 3 zeigt ferner einen maximalen Reduktionsmittelfüllstand NH3_SPF_max des SCR-Partikelfilters 16. Es ist erkennbar, dass die erste Soll-Füllstandskennlinie F1 im gesamten Temperaturbereich unterhalb des maximalen NH₃-Füllstands liegt. Mit anderen Worten erfolgt in dem Fall, dass der SCR-Katalysator 18 seine Mindesttemperatur noch nicht erreicht hat, gleichzeitig der SCR-Partikelfilter 16 jedoch schon seine Mindesttemperatur aufweist, die Reduktionsmitteldosierung in einem ersten Betriebsmodus füllstandsabhängig so, dass der Reduktionsmittelfüllstand des SCR-Partikelfilters 16 kleiner als sein maximaler Reduktionsmittelfüllstand NH3_SPF_max ist. Ein Reduktionsmitteldurchbruch durch den SCR-Partikelfilter 16 wird in diesem ersten Betriebsmodus somit unterbunden.

In der anschließenden Abfrage in S7 wird ein ermittelter Ist-Füllstand NH3_SPF_ist des SCR-Partikelfilters 16 mit dem angeforderten Soll-Füllstand gemäß der ersten Soll-Füllstandskennlinie F1 verglichen. Ein entsprechender zwischengeschalteter Schritt, in welchem der Ist-Füllstand des SCR-Partikelfilters 16 in Abhängigkeit von der zudosierten Reduktionsmittelmenge, der NO_{X}-Rohemission des Verbrennungsmotors 10 sowie einer eventuellen Reduktionsmitteldesorption und/oder eines Reduktionsmitteldurchbruchs ermittelt wird, ist aus Gründen der Übersichtlichkeit in Figur 2 nicht dargestellt. Es versteht sich jedoch, dass der aktuelle Füllstand kontinuierlich bestimmt wird. Wenn die Abfrage in S7 verneint wird, das heißt, der Soll-Füllstand des SCR-Partikelfilters 16 ist noch nicht erreicht, beispielsweise nach einem Motorstart, so geht das Verfahren zu Schritt S8 über, wo die Reduktionsmitteldosierung aktiviert wird. Ausgehend von S8 geht das Verfahren zurück zu Schritt S2 und durchläuft erneut die Temperaturermittlung und -abfragen S3 und S4 sowie die Füllstandsabfrage S7. Solange die Temperaturverhältnisse sich nicht signifikant ändern und der Soll-Füllstand NH3_SPF_soll noch nicht erreicht ist, erfolgt die Reduktionsmitteldosierung solange, bis die temperaturabhängige Soll-Füllstandsschwelle gemäß Kennlinie F1 für den SCR-Partikelfilter 16 erreicht ist. In diesem Fall geht das Verfahren von der Abfrage von S7 zu S5 über, wo die Reduktionsmitteldosierung deaktiviert wird. Bei unveränderten Temperaturverhältnissen bleibt die NH₃-Dosierung solange deaktiviert, bis der Füllstand NH3_SPF_ist den Soll-Füllstand NH3_SPF_soll erneut unterschreitet. (Hier kann eine Mindestfüllstandsschwelle mit einem gewissen Abstand unterhalb der Soll-Füllstandsschwelle NH3_SPF_soll vorgegeben werden, um ein ständiges Umschalten zwischen aktivierter und deaktivierter NH₃-Dosierung zu vermeiden.(Diese Abfrage ist aus Gründen der Übersichtlichkeit jedoch hier nicht dargestellt.)

Sobald der nachgeschaltete SCR-Katalysator 18 seine Mindesttemperatur T_SCR_min erreicht hat, wird die Abfrage in S3 bejaht, sodass das Verfahren zu S9 übergeht. In S9 wird der ermittelte Abgasmassenstrom m_Abgas mit einer vorbestimmten Abgasmassenstromschwelle m_max verglichen. Die Abgasmassenstromschwelle m_max wird beispielweise so vorgegeben, dass sie einem Massenstrom bei einer Motorleistung von zumindest 80 %, insbesondere zumindest 90 %, einer maximalen Motorleistung (Nennleistung) entspricht. In einer besonderen Ausführung des Verfahrens kann m_Abgas auch dem Abgasstrom entsprechen, der bei Volllast, also bei der Nennleistung des Verbrennungsmotors 10 vorliegt.

Wenn der aktuelle Abgasmassenstrom die Schwelle m_Abgas unterschreitet, weil der Verbrennungsmotor 10 sich beispielsweise im Teillastbereich befindet, und die Abfrage S9 also verneint wird, geht das Verfahren zu Schritt S10 über. In diesem Fall wird nunmehr auch für den nachgeschalteten SCR-Katalysator 18 ein Soll-Füllstand NH3_SCR_soll in Abhängigkeit von seiner Temperatur T_SCR vorgegeben. Der Soll-Füllstand NH3_SCR_soll wird vorzugsweise mit einem deutlichen Sicherheitsabstand zu einem maximalen Füllstand NH3_SCR_max vorbestimmt.

Um eine Beaufschlagung des nachgeschalteten SCR-Katalysators 18 mit dem Reduktionsmittel NH₃ zu erzielen, wird ein Reduktionsmitteldurchbruch durch den vorgeschalteten SCR-Partikelfilter 16 verursacht. Zu diesem Zweck wird im Schritt S10 der Soll-Füllstand NH3_SPF_soll des SCR-Partikelfilters 16 entsprechend einer zweiten Soll-Füllstandskennlinie F2 bestimmt, welche ebenfalls in Figur 3 gezeigt ist. Erkennbar liegt die zweite Soll-Füllstandskennlinie F2 zumindest in einem bestimmten Temperaturbereich des SCR-Partikelfilters 16 oberhalb seines maximalen Füllstands NH3_SPF_max. Mit anderen Worten wird in diesem Temperaturbereich die Reduktionsmitteldosierung so betrieben, dass der Reduktionsmittelfüllstand der ersten Abgasreinigungseinrichtung (SCR-Partikelfilter 16) größer ist als ihr maximaler Reduktionsmittelfüllstand NH3_SPF_max. Die über den maximalen Füllstand hinausgehende Reduktionsmittelmenge überläuft somit den SCR-Partikelfilter 16 und beaufschlagt den nachgeschalteten SCR-Katalysator 18, sodass dieser mit dem Reduktionsmittel NH₃ beladen wird.

In der anschließenden Abfrage S11 wird nunmehr der Ist-Reduktionsmittelfüllstand NH3_SCR_ist des SCR-Katalysators 18 mit seinem Soll-Füllstand NH3_SCR_soll verglichen. Nicht dargestellt in Figur 2 ist die Ermittlung des Ist-Reduktionsmittelfüllstandes NH3_SCR_ist des SCR-Katalysators 18, die in Abhängigkeit von dem Reduktionsmittelaustrag aus dem SCR-Partikelfilter 16 sowie dem Reduktionsmittelverbrauch des SCR-Katalysators 18 kontinuierlich erfolgt. Wird die Abfrage S11 verneint, wie dies etwa unmittelbar nach der Umstellung auf den zweiten Betriebsmodus der Fall sein wird, geht das Verfahren zu Schritt S12 über, wo die Reduktionsmitteldosierung aktiviert wird.

Ausgehend von Schritt S12 geht das Verfahren über zu dem Temperaturbestimmungs-und -abfrageblock der Schritte S2 bis S4. Bei unveränderten Temperaturverhältnissen, das heißt solange der SCR-Katalysator 18 seine Mindesttemperatur T_SCR_min aufweist, und solange die maximale Abgasmassenschwelle m_Abgas nicht erreicht wird, wird die Reduktionsmitteldosierung gemäß dem zweiten Betriebsmodus, das heißt mit der Füllstandskennlinie F2 des SCR-Partikelfilters 16 fortgesetzt. Dies erfolgt solange, bis der SCR-Katalysator 18 seinen Soll-Füllstand NH3_SCR_soll erreicht. Sobald dies der Fall ist, wird die Abfrage S11 verneint, sodass das Verfahren zu S6 übergeht, wo eine erneute Festlegung des SollFüllstands des SCR-Partikelfilters NH3_SPF_soll gemäß der ersten Funktion F1 bestimmt wird. Da im ersten Zyklus nach Verneinung der Abfrage S11 der SCR-Partikelfilter 16 eine Reduktionsmittelbeladung oberhalb der Schwelle gemäß erster Kennlinie F1 aufweist und die Abfrage in S7 verneint wird, wird somit in S5 die Reduktionsmitteldosierung deaktiviert.

Im Ergebnis wird im Fahrzeugteillastbetrieb somit zwischen dem ersten Betriebsmodus, bei dem der SCR-Partikelfilter 16 unterhalb seines maximalen Füllstandes gemäß der Kennlinie F1 beladen wird, und dem zweiten Betriebsmodus, bei dem der SCR-Partikelfilter 16 gemäß der zweiten Füllstandskennlinie F2 überladen wird, hin- und hergeschaltet. Erst wenn der SCR-Katalysator 18 eine untere Füllstandsschwelle erreicht, die mit einem gewissen Abstand gegenüber seiner Soll-Füllstandskennlinie vorgegeben wird, wird der zweite Betriebsmodus wieder aktiviert.

Wenn sich der Betrieb des Verbrennungsmotors 10 in Richtung höherer Lasten verändert, beispielsweise wenn aufgrund einer Autobahn- oder Landstraßenfahrt ein Volllastbetrieb vorliegt, erfolgt eine starke Zunahme des Abgasmassenstroms. In einer solchen Betriebssituation ist einerseits eine vollständige Umsetzung der Stickoxide des Abgases durch den kleindimensionierten SCR-Partikelfilter 16 nicht gewährleistet. Dies liegt teilweise daran, dass aufgrund der hohen Raumgeschwindigkeiten die Kontaktzeiten des Abgases mit dem Katalysatormaterial zu niedrig sind. Jedoch findet in nennenswertem Umfang eine Teilreduktion von NO₂ hauptsächlich zu NO im SCR-Partikelfilter 16 statt. Gleichzeitig kommt es aufgrund der hohen Abgastemperaturen zu einer Desorption von NH₃ aus dem SCR-Partikelfilter 16, das somit zusammen mit dem NO₂-armen Abgas den nachgeschalteten SCR-Katalysator 18 beaufschlagt. Da die Stickoxide niedrigerer Oxidationsstufen (NO, N₂O etc.) vergleichsweise langsam katalytisch am SCR-Katalysator umgesetzt werden, kann bei hohen Abgasmassenströmen und dem ungünstigen NO₂/NO-Verhältnis der SCR-Katalysator 18 seine volle Leistungsfähigkeit hinsichtlich seiner Konvertierungsleistung nicht erreichen. Um diesem Problem zu begegnen, erfolgt erfindungsgemäß bei betriebswarmem SCR-Katalysator 18 und hohen Abgasmassenströmen eine Absenkung der Reduktionsmittelbeladung des SCR-Partikelfilters 16.

Wenn die Abfrage in S9 nach Figur 2 also bejaht wird, demnach also ein hoher Abgasmassenstrom bei betriebswarmem SCR-Katalysator 18 vorliegt, geht das Verfahren zu dem optionalen Schritt S13 weiter, wo zunächst überprüft wird, ob der SCR-Katalysator 18 eine Mindestbeladung NH3_SCR_min aufweist. Wird die Abfrage bejaht, kann davon ausgegangen werden, dass auch der vorgeschaltete SCR-Partikelfilter 16 voll beladen ist. In diesem Fall geht das Verfahren zu Schritt S14 weiter, wo für die Steuerung des Reduktionsmittelfüllstands des SCR-Partikelfilters 16 eine dritte Füllstandskennlinie F3 vorbestimmt wird. Die dritte Füllstandskennlinie F3 liegt über dem relevanten Temperaturbereich höchstens bei 10 % eines maximalen Füllstands des SCR-Partikelfilters 16, vorzugsweise bei 0%, wie auch in Figur 3 dargestellt ist. Dies bedeutet, dass der SCR-Partikelfilter 16 im Volllastbetriebsmodus entleert wird. Im anschließenden Schritt S15 wird überprüft, ob ein aktueller NO_{X}-Umsatz zumindest einem Mindest-NO_{X}-Umsatz NO_{X_}min entspricht. Ist dies der Fall, wird in Schritt S5 die Reduktionsmitteldosierung unterbrochen. Jetzt erfolgt eine NH₃-Desorption und Entleerung des SCR-Partikelfilters 16, und das freigesetzte NH₃ beaufschlagt den nachgeschalteten SCR-Katalysator 18, der darüber hinaus zuvor im Teillastbetrieb beladen wurde (Schritte S9-S12). Auf diese Weise wird der SCR-Partikelfilter 16 bei hohen Abgasmassenströmen (oder hohen Lasten) heruntergefahren, sodass in dieser Betriebssituation der Unterboden-SCR-Katalysator 18 die alleinige NO_{X}-Konvertierung übernimmt.

Figur 4 zeigt den zeitlichen Verlauf des NO_{X}-Umsatzes in dem SCR-Partikelfilter 16 sowie in dem nachgeschalteten SCR-Katalysator 18 vor und nach der Deaktivierung der Reduktionsmitteldosierung bei hohen Abgasmassenströmen. Erkennbar nimmt nach dem Abstellen der Dosierung (wenn der kritische Abgasmassenstrom m_max erreicht ist) der NO_{X}-Umsatz im SCR-Partikelfilter 16 kontinuierlich ab. Ab diesem Zeitpunkt sinkt der Umsatz im SCR-Partikelfilter 16 infolge von Verbrauch des gespeicherten NH₃ und von Desorption. Gleichzeitig mit Leerlaufen des SCR-Partikelfilters 16 nimmt der Umsatz im SCR-Katalysator 18 gegenläufig zu, sodass dieser die vollständige Konvertierung übernimmt. Unterstützt wird dies durch das hohe N₂O/NO-Verhältnis sowie die geringere Raumgeschwindigkeit und somit höhere Kontaktzeit des Abgases im SCR-Katalysator 18. Figur 4 lässt auch erkennen, dass der SCR-Katalysator 18 bei Überfüllung nur leerlaufen kann, wenn der SCR-Partikelfilter 16 leer wird.

Wird die optionale Abfrage S13 in Figur 2 verneint, das heiß, der SCR-Katalysator 18 ist nicht oder nur zu schwach beladen, geht das Verfahren zu den Schritten S10-S12 weiter, um die Beladung des SCR-Partikelfilters 16 wieder gemäß der Füllstandskennlinie F2 zu betreiben und diesen zu überladen und somit den SCR-Katalysator 18 zu füllen, bis dieser die in S13 geforderte Mindestfüllung NH3_SCR_min aufweist, um sodann den SCR-Partikelfilter 16 herunterzufahren.

Die Deaktivierung des SCR-Partikelfilters 16 erfolgt solange, bis in Schritt S15 ein zu geringer NOX-Umsatz festgestellt wird. In diesem Fall geht das Verfahren zu den Schritten S10-S12 weiter, um den SCR-Katalysator 18 erneut mit Reduktionsmittel zu befüllen.

Eine weitere vorteilhafte (hier nicht gezeigte) Ausführung betrifft die gezielte Entleerung des SCR-Partikelfilters 16 in einer Situation, in der der nachgeschaltete SCR-Katalysator 18 während (und trotz) der dauerhaften Anwendung der ersten Füllstandskennlinie F1 überladen wird. Diese Situation kann infolge Schlupfes von Reduktionsmittel durch den SCR-Partikelfilter 16 auftreten, weil dieser beispielsweise in einer dynamischen Betriebssituation plötzlich stark erwärmt wird und NH₃ desorbiert. In einem solchen Fall kann vorgesehen sein, von der Anwendung der Füllstandskennlinie F1 direkt auf die Anwendung der dritten Füllstandskennlinie F3 zu schalten, das heißt, den SCR-Partikelfilter 16 "herunterzufahren" und den SCR-Katalysator 18 "hochzufahren". Zu diesem Zweck könnte etwa zwischen S6 und S7 eine weitere Abfrage zwischengeschaltet werden, die prüft, ob der aktuelle Füllstand des SCR-Katalysators 18 eine vorbestimmte obere Grenze überschreitet. Wenn diese Abfrage bejaht wird, geht das Verfahren zu S14 über, um auf die Steuerung gemäß der Füllstandskennlinie F3 zu wechseln.

### Bezugszeichenliste

- 10: Verbrennungsmotor
- 12: Abgaskanal
- 14: SCR-Katalysatorsystem
- 16: SCR-Abgasreinigungseinrichtung / SCR-Partikelfilter
- 18: SCR-Katalysator
- 20: Reduktionsmitteldosiereinrichtung
- 22: Reduktionsmittel-Vorratsbehälter
- 24: Düse
- 26: Temperatursensor
- 28: NO_{X}-Sensor
- 30: NOx-Sensor
- 32: Steuerung
- 34: Abgasturbine
- 36: Verdichter
- 38: Abgasrückführleitung

## Patentansprüche

1. Verfahren zum Betreiben einer Reduktionsmitteldosierung eines SCR-Katalysatorsystems (14) eines Verbrennungsmotors (10), wobei das SCR-Katalysatorsystem (14) eine erste SCR-Abgasreinigungseinrichtung (16) und einen dieser nachgeschalteten SCR-Katalysator (18) aufweist sowie eine Reduktionsmitteldosiereinrichtung (20) zur Dosierung eines Reduktionsmittels in einen Abgasstrom stromauf der ersten SCR-Abgasreinigungseinrichtung (16), **dadurch gekennzeichnet, dass**, wenn ein Abgasmassenstrom (m_Abgas) größer als eine vorbestimmte Abgasmassenstromschwelle (m_max) ist und eine Temperatur (T_SCR) des nachgeschalteten SCR-Katalysators (18) größer als eine vorbestimmte Mindesttemperatur (T_SCR_min) ist, die Reduktionsmitteldosierung in einen Hochlastbetriebsmodus (III) wechselt, in welcher ein Reduktionsmittelsollfüllstand (NH3_SPF_soll) der ersten SCR-Abgasreinigungseinrichtung (16) reduziert oder auf null gesenkt wird.

2. Verfahren nach Anspruch 1, **dadurch gekennzeichnet, dass** während des Hochlastbetriebsmodus (III) ein Reduktionsmittelfüllstand (NH3_SPF) der ersten SCR-Abgasreinigungseinrichtung (16) entsprechend einer temperaturabhängigen Soll-Füllstandskennlinie (F3) gesteuert wird, die über den relevanten Temperaturbereich höchstens bei 10 % eines maximalen Füllstands der ersten SCR-Abgasreinigungseinrichtung (16) liegt, insbesondere bei höchstens 5 %, vorzugsweise bei 0%.

3. Verfahren nach Anspruch 1 oder 2, **dadurch gekennzeichnet, dass** eine zusätzliche Bedingung für den Wechsel in den Hochlastbetriebsmodus (III) das Überschreiten einer Mindestbeladung (NH3_SCR-min) des nachgeschalteten SCR-Katalysators (18) ist.

4. Verfahren nach einem der vorhergehenden Ansprüche, **dadurch gekennzeichnet, dass** Bedingungen für ein Beenden des Hochlastbetriebsmodus (III) ein Unterschreiten der vorbestimmten Abgasmassenstromschwelle (m_max) durch den Abgasmassenstrom und/oder ein Absinken einer NO_{X}-Konvertierungsrate unterhalb einer vorbestimmten Konvertierungsschwelle (NOX_min) und/oder das Absinken des Reduktionsmittelfüllstands des SCR-Katalysators (18) unterhalb eines Sollfüllstands (NH3_SCR_soll) ist.

5. Verfahren nach einem der vorhergehenden Ansprüche, **dadurch gekennzeichnet, dass**, wenn die Temperatur des nachgeschalteten SCR-Katalysators (18) größer oder gleich seiner Mindesttemperatur (T_SCR_min) ist und der Abgasmassenstrom (m_Abgas) kleiner als die vorbestimmte Abgasmassenstromschwelle (m_max) ist, die Reduktionsmitteldosierung zumindest zeitweise in einem Teillastbetriebsmodus (II) so erfolgt, dass der Reduktionsmittelfüllstand (NH3_SPF) der ersten SCR-Abgasreinigungseinrichtung (16) größer ist als ihr maximaler Reduktionsmittelfüllstand (NH3_SPF_max), sodass ein die erste SCR-Abgasreinigungseinrichtung (16) passierender Reduktionsmitteldurchbruch den nachgeschalteten SCR-Katalysator (18) beaufschlagt.

6. Verfahren nach Anspruch 6, **dadurch gekennzeichnet, dass** der Teillastbetriebsmodus (II) beendet wird, wenn der Reduktionsmittelfüllstand (NH3_SCR) des SCR-Katalysators (18) seinen temperaturabhängigen Soll-Füllstand (NH3_SCR_soll) erreicht oder überschreitet.

7. Verfahren nach einem der vorhergehenden Ansprüche, **dadurch gekennzeichnet, dass** wenn die Temperatur der ersten SCR-Abgasreinigungseinrichtung (16) größer oder gleich einer vorbestimmten Mindesttemperatur (T_SPF_min) ist und die Temperatur des nachgeschalteten SCR-Katalysators (18) kleiner als eine vorbestimmte Mindesttemperatur (T_SCR_min) ist, die Reduktionsmitteldosierung in einem Aufwärmbetriebsmodus (I) so erfolgt, dass ein Reduktionsmittelfüllstand (NH3_SPF) der ersten SCR-Abgasreinigungseinrichtung (16) kleiner als ihr maximaler Reduktionsmittelfüllstand (NH3_SPF_max) ist.

8. Verfahren nach einem der vorhergehenden Ansprüche, **dadurch gekennzeichnet, dass** im Teillastbetriebsmodus (II) ein Soll-Füllstand (NH3_SCR_soll) des SCR-Katalysators (18) über den Reduktionsmittelfüllstand (NH3_SPF) der ersten SCR-Abgasreinigungseinrichtung (16) temperaturabhängig gesteuert wird.

9. SCR-Katalysatorsystem (14) eines Verbrennungsmotors (10), mit einer ersten, motornahen SCR-Abgasreinigungseinrichtung (16) und einem, dieser nachgeschalteten SCR-Katalysator (18) sowie einer Reduktionsmitteldosiereinrichtung (20) zur Dosierung eines Reduktionsmittels in den Abgasstrom stromauf der ersten SCR-Abgasreinigungseinrichtung (16), **gekennzeichnet, durch** eine Steuerung (32), die eingerichtet ist, das Verfahren zum Betreiben einer Reduktionsmitteldosierung nach einem der Ansprüche 1 bis 8 auszuführen.

10. SCR-Katalysatorsystem (14) nach Anspruch 9, **dadurch gekennzeichnet, dass** das SCR-Katalysatorsystem (14) zusätzlich einen Partikelfilter umfasst und/oder die erste SCR-Abgasreinigungseinrichtung (16) als ein, eine katalytische SCR-Beschichtung aufweisender Partikelfilter ausgebildet ist.

## Claims

1. Method for performing a dosing of reducing agent in an SCR catalytic converter system (14) of an internal combustion engine (10), wherein the SCR catalytic converter system (14) has a first SCR exhaust-gas purification device (16) and, positioned downstream thereof, an SCR catalytic converter (18), and also has a reducing agent dosing device (20) for dosing a reducing agent into an exhaust-gas flow upstream of the first SCR exhaust-gas purification device (16), **characterized in that**, if an exhaust-gas mass flow (m_Abgas) is higher than a predetermined exhaust-gas mass flow threshold (m_max) and a temperature (T_SCR) of the downstream SCR catalytic converter (18) is higher than a predetermined minimum temperature (T_SCR_min), the dosing of reducing agent switches to a high-load operating mode (III) in which a reducing agent setpoint fill level (NH3_SPF_soll) of the first SCR exhaust-gas purification device (16) is reduced or is lowered to zero.

2. Method according to Claim 1, **characterized in that**, during the high-load operating mode (III), a reducing agent fill level (NH3_SPF) of the first SCR exhaust-gas purification device (16) is controlled in accordance with a temperature-dependent setpoint fill level characteristic curve (F3) which, over the relevant temperature range, lies at most at 10% of a maximum fill level of the first SCR exhaust-gas purification device (16), in particular at most at 5%, preferably at 0%.

3. Method according to Claim 1 or 2, **characterized in that** an additional condition for the change to the high-load operating mode (III) is the exceedance of a minimum load (NH3_SCR-min) of the downstream SCR catalytic converter (18).

4. Method according to one of the preceding claims, **characterized in that** conditions for an ending of the high-load operating mode (III) are an undershooting of the predetermined exhaust-gas mass flow threshold (m_max) by the exhaust-gas mass flow and/or a fall of a NO_{X} conversion rate below a predetermined conversion threshold (NOX_min) and/or the fall of the reducing agent fill level of the SCR catalytic converter (18) below a setpoint fill level (NH3_SCR_soll).

5. Method according to one of the preceding claims, **characterized in that**, if the temperature of the downstream SCR catalytic converter (18) is higher than or equal to its minimum temperature (T_SCR_min) and the exhaust-gas mass flow (m_Abgas) is lower than the predetermined exhaust-gas mass flow threshold (m_max), the dosing of reducing agent is performed at least temporarily in a part-load operating mode (II) such that the reducing agent fill level (NH3_SPF) of the first SCR exhaust-gas purification device (16) is higher than its maximum reducing agent fill level (NH3_SPF_max), such that a breakthrough of reducing agent passing through the first SCR exhaust-gas purification device (16) impinges on the downstream SCR catalytic converter (18).

6. Method according to Claim 6, **characterized in that** the part-load operating mode (II) is ended when the reducing agent fill level (NH3_SCR) of the SCR catalytic converter (18) reaches or exceeds its temperature-dependent setpoint fill level (NH3_SCR_soll).

7. Method according to one of the preceding claims, **characterized in that**, if the temperature of the first SCR exhaust-gas purification device (16) is greater than or equal to a predetermined minimum temperature (T_SPF_min) and the temperature of the downstream SCR catalytic converter (18) is lower than a predetermined minimum temperature (T_SCR_min), the dosing of reducing agent is performed in a warm-up operating mode (I) such that a reducing agent fill level (NH3_SPF) of the first SCR exhaust-gas purification device (16) is lower than its maximum reducing agent fill level (NH3_SPF_max).

8. Method according to one of the preceding claims, **characterized in that**, in the part-load operating mode (II), a setpoint fill level (NH3_SCR_soll) of the SCR catalytic converter (18) is controlled in a temperature-dependent manner by means of the reducing agent fill level (NH3_SPF) of the first SCR exhaust-gas purification device (16).

9. SCR catalytic converter system (14) of an internal combustion engine (10), having a first, close-coupled SCR exhaust-gas purification device (16) and, positioned downstream thereof, an SCR catalytic converter (18), and also having a reducing agent dosing device (20) for dosing a reducing agent into the exhaust-gas flow upstream of the first SCR exhaust-gas purification device (16), **characterized by** a controller (32) which is set up to carry out the method for performing a dosing of reducing agent according to one of Claims 1 to 8.

10. SCR catalytic converter system (14) according to Claim 9, **characterized in that** the SCR catalytic converter system (14) additionally comprises a particle filter, and/or the first SCR exhaust-gas purification device (16) is formed as a particle filter which has a catalytic SCR coating.

## Revendications

1. Procédé pour faire fonctionner un dosage d'agent réducteur d'un système catalyseur à RCS (14) d'un moteur à combustion interne (10), le système catalyseur à RCS (14) possédant un premier dispositif de purification des gaz d'échappement à RCS (16) et un catalyseur à RCS (18) monté en aval de celui-ci ainsi qu'un dispositif de dosage d'agent réducteur (20) destiné à doser un agent réducteur dans un flux de gaz d'échappement en amont du premier dispositif de purification des gaz d'échappement à RCS (16), **caractérisé en ce que** lorsqu'un débit massique de gaz d'échappement (m_Abgas) est supérieur à un seuil de débit massique de gaz d'échappement prédéfini (m_max) et une température (T_SCR) du catalyseur à RCS (18) monté en aval est supérieure à une température minimale prédéfinie (T_SCR_min), le dosage d'agent réducteur passe dans un mode de fonctionnement à charge élevée (III) dans lequel un niveau de remplissage de consigne d'agent réducteur (NH3_SPF_soll) du premier dispositif de purification des gaz d'échappement à RCS (16) est réduit ou abaissé à zéro.

2. Procédé selon la revendication 1, **caractérisé en ce que** pendant le mode de fonctionnement à charge élevée (III), un niveau de remplissage d'agent réducteur (NH3_SPF) du premier dispositif de purification des gaz d'échappement à RCS (16) est commandé conformément à une courbe caractéristique de niveau de remplissage de consigne (F3) dépendante de la température qui, sur la plage de températures pertinente, se trouve au maximum à 10 % d'un niveau de remplissage maximal du premier dispositif de purification des gaz d'échappement à RCS (16), notamment au maximum à 5 %, de préférence à 0 %.

3. Procédé selon la revendication 1 ou 2, **caractérisé en ce qu'**une condition supplémentaire pour le passage au mode de fonctionnement à charge élevée (III) est le dépassement d'une charge minimale (NH3_SCR-min) du catalyseur à RCS (18) monté en aval.

4. Procédé selon l'une des revendications précédentes, **caractérisé en ce que** les conditions pour mettre fin au mode de fonctionnement à charge élevée (III) sont un franchissement vers le bas du seuil de débit massique de gaz d'échappement prédéfini (m_max) par le débit massique de gaz d'échappement et/ou une chute d'un taux de conversion de NOx au-dessous d'un seuil de conversion prédéfini (NOX_min) et/ou la chute du niveau de remplissage d'agent réducteur du catalyseur à RCS (18) au-dessous d'un niveau de remplissage de consigne (NH3_SCR_soll).

5. Procédé selon l'une des revendications précédentes, **caractérisé en ce que** lorsque la température du catalyseur à RCS (18) monté en aval est supérieure ou égale à sa température minimale (T_SCR_min) et le débit massique de gaz d'échappement (m_Abgas) est inférieur au seuil de débit massique de gaz d'échappement prédéfini (m_max), le dosage d'agent réducteur est effectué au moins temporairement dans un mode de fonctionnement en charge partielle (II) de sorte que le niveau de remplissage d'agent réducteur (NH3_SPF) du premier dispositif de purification des gaz d'échappement à RCS (16) est supérieur à son niveau de remplissage d'agent réducteur maximal (NH3_SPF_max), de sorte qu'une percée d'agent réducteur qui passe par le premier dispositif de purification des gaz d'échappement à RCS (16) alimente le catalyseur à RCS (18) monté en aval.

6. Procédé selon la revendication 6, **caractérisé en ce que** le mode de fonctionnement en charge partielle (II) prend fin lorsque le niveau de remplissage d'agent réducteur (NH3_SCR) du catalyseur à RCS (18) atteint ou dépasse son niveau de remplissage de consigne dépendant de la température (NH3_SRC_soll).

7. Procédé selon l'une des revendications précédentes, **caractérisé en ce que** lorsque la température du premier dispositif de purification des gaz d'échappement à RCS (16) est supérieure ou égale à une température minimale prédéfinie (T_SPF_min) et la température du catalyseur à RCS (18) monté en aval est inférieure à une température minimale prédéfinie (T_SCR_min), le dosage d'agent réducteur est effectué dans un mode de fonctionnement de réchauffage (I) de sorte qu'un niveau de remplissage d'agent réducteur (NH3_SPF) du premier dispositif de purification des gaz d'échappement à RCS (16) est inférieur à son niveau de remplissage d'agent réducteur maximal (NH3_SPF_max).

8. Procédé selon l'une des revendications précédentes, **caractérisé en ce que** dans le mode de fonctionnement en charge partielle (II), un niveau de remplissage de consigne (NH3_SCR_soll) du catalyseur à RCS (18) est commandé en fonction de la température par le biais du niveau de remplissage d'agent réducteur (NH3_SPF) du premier dispositif de purification des gaz d'échappement à RCS (16).

9. Système catalyseur à RCS (14) d'un moteur à combustion interne (10), comprenant un premier dispositif de purification des gaz d'échappement à RCS (16) proche du moteur et un catalyseur à RCS (18) monté en aval de celui-ci ainsi qu'un dispositif de dosage d'agent réducteur (20) destiné à doser un agent réducteur dans le flux de gaz d'échappement en amont du premier dispositif de purification des gaz d'échappement à RCS (16), **caractérisé par** une commande (32) qui est conçue pour mettre en oeuvre le procédé pour faire fonctionner un dosage d'agent réducteur selon l'une des revendications 1 à 8.

10. Système catalyseur à RCS (14) selon la revendication 9, **caractérisé en ce que** le système catalyseur à RCS (14) comprend en outre un filtre à particules et/ou le premier dispositif de purification des gaz d'échappement à RCS (16) est réalisé sous la forme d'un filtre à particules qui possède un revêtement catalytique à RCS.
